Europäisches Patentamt

(19) European Patent Office

Office européen des brevets

(11) Publication number: **0 287 825 B1**

(12) # EUROPEAN PATENT SPECIFICATION

(45) Date of publication of patent specification :
**24.04.91 Bulletin 91/17**

(51) Int. Cl.⁵ : **B60B 33/00**

(21) Application number: **88104634.6**

(22) Date of filing : **23.03.88**

(54) **Self-orientatable twin-wheel castor of the type comprising a pair of coaxial wheels.**

(30) Priority : **27.03.87 IT 481887 U**

(43) Date of publication of application :
**26.10.88 Bulletin 88/43**

(45) Publication of the grant of the patent :
**24.04.91 Bulletin 91/17**

(84) Designated Contracting States :
**DE FR SE**

(56) References cited :
**EP-A- 0 054 797**
**DE-A- 2 461 341**
**US-A- 3 909 066**
**US-A- 4 229 855**

(73) Proprietor : **EMILSIDER MECCANICA S.p.A.**
**Via G. di Vittorio 17**
**I-40057 Cadriano di Granarolo Emilia (Prov.**
**Bologna) (IT)**

(72) Inventor : **Melara, Francescantonio**
**Via Ferrarese 8**
**I-40128 Bologna (IT)**

(74) Representative : **Modiano, Guido et al**
**MODIANO, JOSIF, PISANTY & STAUB**
**Modiano & Associati Via Meravigli, 16**
**I-20123 Milano (IT)**

## Description

The present invention relates to a self-orientatable twin-wheel castor of the type comprising a pair of coaxial wheels.

So-called twin-wheel castors comprise a pair of wheels rotatably mounted on an axle. The axle is carried by a support which comprises an upright wall which extends between the wheels and is arranged in a perpendicular plane and a semicylindrical shroud which upwardly covers the wheel. In the upright wall there is provided an upwardly open well acting as rotation seat for a vertical self-orientation pivot intended to be inserted and fixed in a seat of the furniture item to which the castor is to be assembled.

From both faces of the wall there extend two tubular portions coaxial to the axle and internally provided with coupling elements for a collar externally carried by a hollow tang rigidly associated with the respective wheel. The tang acts in practice as bearing for the rotatable support of the wheel on the axle.

Conventional twin-wheel castors have substantial disadvantages, related to the manufacturing method, which compromise their adaptation to the standards set by safety rules. In particular to increase the resistance to wear it is known to produce the wheels integrally in polyamide resins, while if a greater shock-resistance is required the use of polypropylene, which has greater elasticity characteristics, is common.

In any case the wheels produced in polyamide resins, due to the high cost of this material, have an excessive cost, so they have a limited application.

The technical aim of the present invention is to provide a twin-wheel castor which obviates the disadvantages of the known types, i.e. that is capable of offering a wear-resistance equal to that of polyamide resin wheels and a shock-resistance equal to that of polypropylene wheels.

Within this aim, an object of the present invention is to provide a twin-wheel castor with lower rolling noise and adapted to be customized with chromatic differentiations or embossings.

This aim and this object are achieved by a twin-wheel castor which is characterized in that the wheel and the hollow tang are made of shock-resistant material and in that within the hollow tang there is inserted a bush for sliding on the axle, made of a wear-resistant material, said bush being provided with means for coupling to the wheel and to the supporting axle.

Further details of the invention will become apparent from the following detailed description of a preferred embodiment, illustrated only by way of example in the accompanying drawing, wherein :

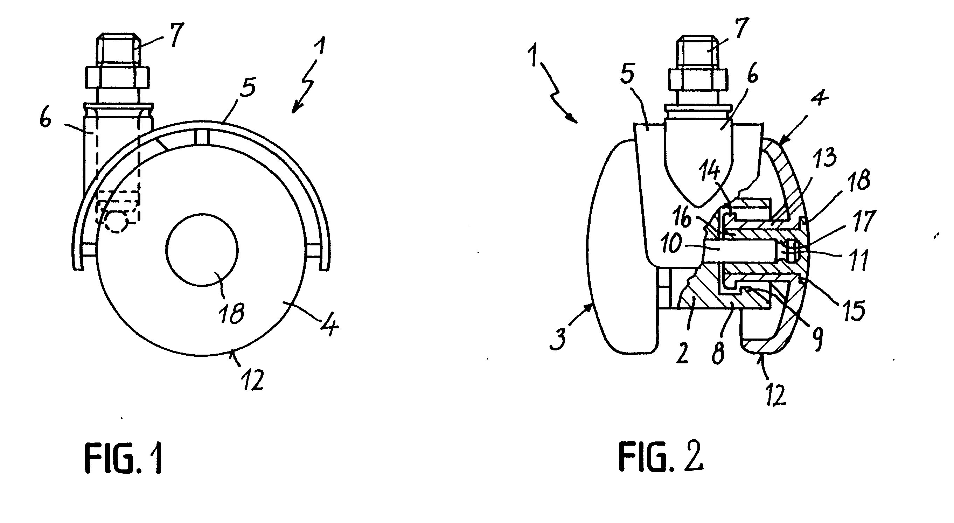

figure 1 is a lateral view of a twin-wheel castor according to the invention, and

figure 2 is a partly sectional lateral view of the wheel of the preceding figure.

With reference to these figures, 1 generally indicates the self-orientatable twin-wheel castor which comprises a support composed of an upright wall 2 which extends between two wheels 3,4.

The wheels 3,4 are upwardly covered by a semicylindrical shroud 5 rigidly associated with the wall 2.

In the wall 2 there is furthermore provided a well 6 which protrudes vertically from the shroud 5 and acts as seat for the rotatable support for the pivot 7, which allows to apply the wheel 1 to the furniture item (chair, trolley or the like).

From both faces of the wall 2 there protrude outwardly two tubular portions 8 which are internally provided with teeth 9 for the axial retention of the wheels.

The tubular portions 8 are coaxial to one another and to an axle 10 for the support of the wheels, said axle being driven through the wall 2 and having, at the opposite ends, an annular groove 11.

The wheels 4 have a convex lateral surface and a cylindrical rolling surface 12.

From the convex surface there extends a tubular portion 13 which, at one end, is provided with an outer collar 14 and, at the opposite end, communicates with the outside through a central opening 15 of the convex surface of the wheel. Between the inner wall of the tubular portion 13 and the outer wall of the axle 10 a space is defined in which a bush 16 is accommodated.

The bush 16 is internally provided with a collar 17 and, on the outer side, with a flange 18. The collar 17 is intended to engage in the groove 11 preventing the slippage of the bush 16 off the axle 10. Conversely the flange 18, abutting on the edge of the opening 15, prevents the slippage of the wheel off the bush.

A fundamental peculiarity of the present invention resides in the mechanical distinction between the part of the wheel 4 which slides on the axle 10, i.e. the bush 16, and the part which rolls on the ground. This allows to provide the bush 16 in wear-resistant material, for example a polyamide resin, and the wheel 4 in shock-resistant material, for example a reinforced copolymer. In this manner it is possible to produce economical and strong wheels, since reinforced copolymers are substantially less expensive and very resistant even at low temperatures. Furthermore, an excellent resistance to wear is provided, ensured by the polyamide bush 16.

It should be furthermore noted that reinforced copolymers are materials softer than polyamide and therefore allow the obtainment of a greater quietness in rolling.

From a mechanical viewpoint the described wheel has an excellent resistance against the slippage of the axle 10. In fact the flange 18 prevents the wheel 4 from axially slipping off the bush 16 which is axially rigidly associated with the axle 10 due to the engagement of the collar 17 in the groove 11.

A further advantage resides in the possibility of customizing or marking the wheels by means of the simple differentiated embossing or moulding or colouring of the flange 18 which can furthermore have a circular or polygonal contour.

## Claims

1. Self-orientatable twin-wheel castor of the type comprising a support (2), an axle (10) carried by said support, a pair of wheels (3,4) provided with hollow tangs (13) mounted on said axle, characterized in that the wheels (3,4) and the respective hollow tangs (13) are made of a shock-resistant material and in that, inside the tangs, respective bushes (16) for sliding on the axle (10), made of a wear-resistant material, are inserted, each bush being provided with means for coupling (18,17) to the wheel and to the supporting axle.

2. Twin-wheel castor according to claim 1, characterized in that said bush (16) has an inner collar (17) engageable in an annular groove (11) of said axle (10).

3. Twin-wheel castor according to claim 1 or 2, characterized in that the bush (16) is insertable in the respective hollow tang (13) through an opening (15) of the wheel, said bush being provided with a flange (18) adapted to abut on the edge of said opening (15).

4. Twin-wheel castor according to one of claims 1-3, characterized in that the wheels (3,4) and the respective tangs (13) are provided in a reinforced copolymer.

5. Twin-wheel castor according to one of claims 1-4, characterized in that the bushes (16) are provided in a polyamide resin.

## Ansprüche

1. Selbsteinstellende Doppelrad-Laufrolle mit einem Träger (2), einer von diesem Träger gehaltenen Achse (10), einem Paar Räder (3, 4), die jeweils mit einem auf der Achse gelagerten hohlen Nabenschaft (13) ausgestattet sind, dadurch gekennzeichnet, daß die Räder (3, 4) und die zugeordneten hohlen Nabenschäfte (13) aus einem stoßabsorbierenden Material gefertigt sind und daß in die Nabenschäfte jeweils eine zugeordnete Buchse (16) aus einem verschleißfesten Material für die Gleitlagerung auf der jeweiligen Achse (10) eingesetzt ist, wobei jede Buchse mit Mitteln (18, 17) zum Kuppeln mit dem zugeordneten Rad (18, 17) sowie mit der Lagerachse versehen ist.

2. Doppelrad-Laufrolle nach Anspruch 1, dadurch gekennzeichnet, daß die Buchse (16) einen Innenwulst (17) hat, welcher in eine Ringnut (11) der Achse (10) einrastbar ist.

3. Doppelrad-Laufrolle nach Anspruch 1 oder 2, dadurch gekennzeichnet, daß die Buchse (16) durch eine Öffnung (15) des Rades in den zugeordneten Nabenschaft (13) einsetzbar ist, wobei die Buchse mit einem Flansch (18) versehen ist, welcher zur Anlage am Rand der Öffnung (15) ausgelegt ist.

4. Doppelrad-Laufrolle nach einem der Ansprüche 1 bis 3, dadurch gekennzeichnet, daß die Räder (3, 4) und die zugeordneten Nabenschäfte (13) aus einem verstärkten Kopolymer bestehen.

5. Doppelrad-Laufrolle nach einem der Ansprüche 1 bis 4, dadurch gekennzeichnet, daß die Buchsen (16) aus einem Polyamid-Harz bestehen.

## Revendications

1. Roulette auto-orientable à deux roues du type comportant un support (2), un axe (10) porté par ledit support, une paire de roues (3, 4) pourvues de moyeux creux (13) montés sur ledit axe, caractérisée en ce que les roues (3, 4) et les moyeux creux respectifs (13) sont réalisés en un matériau résistant aux chocs et en ce que, à l'intérieur des moyeux, sont introduits des manchons respectifs (16) pour un coulissement sur l'axe (10), réalisés en un matériau résistant à l'usure, chaque manchon étant équipé de moyens pour un couplage (18, 17) à la roue et à l'axe de support.

2. Roulette à deux roues selon la revendication 1, caractérisée en ce que ledit manchon (16) possède un bourrelet intérieur (17) pouvant s'engager dans une gorge annulaire (11) dudit axe (10).

3. Roulette à deux roues selon la revendication 1 ou 2, caractérisée en ce que le manchon (16) peut être introduit dans le moyeu creux respectif (13) à travers une ouverture (15) de la roue, ledit manchon étant muni d'un rebord (18) apte à buter sur le bord de ladite ouverture (15).

4. Roulette à deux roues selon l'une quelconque des revendications 1 à 3, caractérisée en ce que les roues (3, 4) et les moyeux respectifs (13) sont réalisés en un copolymère renforcé.

5. Roulette à deux roues selon l'une quelconque des revendications 1 à 4, caractérisée en ce que les manchons (16) sont réalisés en une résine polyamide.

FIG. 2

FIG. 1